# EUROPEAN PATENT SPECIFICATION

(11) **EP 2 921 590 B1**
(45) Date of publication and mention of the grant of the patent: **08.11.2017**
(21) Application number: 15158561.9
(22) Date of filing: 11.03.2015
(51) Int. Cl.: E02F 9/08, B60K 13/04, B60K 15/00, B66C 13/00

(54) **CONSTRUCTION MACHINE**
BAUMASCHINE
MACHINE DE CONSTRUCTION

(30) Priority: 17.03.2014 JP 2014054001
(43) Date of publication of application: 23.09.2015
(73) Proprietor: Hitachi Construction Machinery Co., Ltd., Bunkyo-ku, Tokyo 112-8563 (JP)
(72) Inventor: Fujii, Toshinori, Ibaraki 300-0013 (JP); Mano, Hidenori, Ibaraki 300-0013 (JP); Kamiya, Shohei, Ibaraki 300-0013 (JP)
(74) Representative: MERH-IP Matias Erny Reichl Hoffmann Patentanwälte PartG mbB

(56) References cited:
- WO-A1-2009/001587
- WO-A1-2014/125623
- JP-A- 2013 194 666
- KR-A- 20140 031 185
- US-A1- 2010 275 588

## Description

### BACKGROUND OF THE INVENTION

### Field of the Invention

The present invention relates to a construction machine, and particularly relates to an installation structure of a urea water supply device that feeds urea water under pressure to a urea water injection valve in a urea water supply system of an engine that is mounted on a construction machine.

### Description of the Related Art

A construction machine such as a hydraulic shovel is constructed by including a traveling structure capable of travelling by a traveling motor, a revolving superstructure that is disposed on the traveling structure, and a working device that is mounted to the revolving superstructure to perform an excavating work of earth and sand, or the like. The revolving superstructure has an operator's cab thereon located on one side in a width direction with a mounting section for the working device between both sides. Such a construction machine further has a hydraulic pump that is located on a rear side of the operator's cab to supply pressure oil to the traveling motor and the working device and an engine for operating the hydraulic pump. A typical engine to be mounted on a construction machine is a diesel engine.
Incidentally, in recent years, a urea SCR system has been known as the system which reduces NOx (nitrogen oxide) in the exhaust gas exhausted from a diesel engine, and purifies the exhaust gas, and the urea SCR system is being also applied to a diesel engine mounted on a construction machine.

A urea SCR system is a NOx selective catalytic reduction system that selectively reduces NOx in exhaust gas by using urea water as a reducing agent, and has a urea water injection valve that injects urea water to an exhaust upstream side of a NOx selective catalytic reduction apparatus, a urea water tank for storing the urea water, and a urea water supply device including a supply pump that is interposed in urea water supply piping that connects the urea water tank and the urea water injection valve to feed the urea water under pressure to the urea water injection valve.

In the urea SCR system constructed as above, a urea water tank (a reducing agent tank) is generally installed in a position distant from an engine on a revolving superstructure, for example, in a position on a side opposite from an operator's seat with the mounting section for a working device therebetween, for example, mainly for the purpose of preventing overheating and facilitating replenishing work of urea water (see Japanese Patent Laid-Open No. 2008-240676, and Japanese Patent Laid-Open No. 2013-181400).
Meanwhile, in a cold district or the like, cooling water piping in which the cooling water for an engine is circulated is laid along urea water supply piping to be able to warm urea water with the heat of the cooling water for the engine, in order to prevent the urea water flowing in the urea water supply piping from being frozen or defrost the frozen urea water in the winter season.

However, the urea water supply piping and the cooling water piping are connected to the urea water tank and the urea water supply device by using connectors, and the cooling water piping cannot be laid along the urea water supply piping at the connector portions, whereby there arises the problem that urea water is easily frozen at the connector portion.
Therefore, it is considered to provide a thermal insulating cover with which the connector portion of the urea water tank is covered, for example, and prevent reduction of the temperature of the connector portion of the urea water supply piping via air in the thermal insulating cover which is warmed with the heat of the cooling water for the engine (see Japanese Patent Laid-Open No. 2011-241734).

In the case of the urea SCR system disclosed in Japanese Patent Laid-Open No. 2008-240676 described above, the urea water injection valve is located above the engine, whereas the urea water supply device (the reducing agent pump) is placed on the urea water tank.
When the urea water supply device is placed on the urea water tank like this, the length of the piping from the urea water supply device to the urea water injection valve is long, and when the construction machine tilts in the longitudinal direction, the difference of elevation between the urea water supply device and the urea water injection valve significantly changes, and the discharge pressure of the urea water supply device to the urea water injection valve could vary significantly, whereby there arises the problem of being unable to inject the urea water stably.
Further, in the case of the urea SCR system which is disclosed in Japanese Patent Laid-Open No. 2013-181400 described above, the installation side of the urea water injection valve (the reducing agent dispensing device) and the installation side of the urea water supply device (the reducing agent supply device) are opposite sides in the width direction of the construction machine, and further, the installation side of the urea water tank and the installation side of the urea water supply device are opposite sides in the width direction of the construction machine.

When the urea water tank, the urea water supply device and the urea water injection valve are installed on the opposite sides in the width direction of the construction machine as above, the length of the piping from the urea water supply device to the urea water injection valve is long, the length of the piping from the urea water tank to the urea water supply device is also long, and when the construction machine tilts in the width direction, the difference of elevation between the urea water supply device and the urea water injection valve, and further, the difference of elevation between the urea water tank and the urea water supply device change significantly, and the discharge pressure of the urea water supply device to the urea water injection valve and urea water sucking performance of the urea water supply device could vary significantly, whereby there also arises the problem of being unable to inject the urea water stably.

Furthermore, in this case, the urea water supply device is installed on a side portion of the revolving superstructure, the urea water supply device is generally mounted to the revolving superstructure in a lifted state for the purpose of improving a water proofing property, water discharging efficiency and the like, and therefore, a mounting bracket has to be provided additionally to install the urea water supply device, which is not preferable from the viewpoint of installability.

The urea water supply device needs maintenance regularly, and is desired to be installed on the revolving superstructure with maintenance workability taken into consideration.

Further, in Japanese Patent Laid-Open No. 2011-241734, the thermal insulating cover is provided at the connector portion of the urea water tank, but it is conceivable to reduce temperature of the connector portion of the urea water supply piping by similarly providing the thermal insulating cover with respect to the connectors of the urea water supply piping and the cooling water piping in the urea water supply device.
However, when the thermal insulating cover is provided at the urea water supply device, it becomes the problem how the urea water supply device is installed on the revolving superstructure with easiness in attaching and detaching work of the thermal insulating cover as well as the above described maintenance workability, and how efficiently the thermal insulating cover is mounted to the urea water supply device. WO2009/001587 also discloses the preamble of claim 1, i.e. a construction machine comprising a NOx treatment system with a separate Urea tank and supply line and pump thereto.

### SUMMARY OF THE INVENTION

The present invention is made in the light of the problem as above, and has an object to provide a construction machine which is designed so that a urea water supply system can be installed efficiently with urea water made always injectable stably from a urea water injection valve, and a thermal insulating cover that keeps a connector portion of urea water supply piping of the urea water supply device of the urea water supply system warm can be efficiently mounted.

In order to attain the above described object, a construction machine according to the present invention is a construction machine including a revolving superstructure, an operator's cab provided at a front part on the revolving superstructure, a working device mounting section provided at the front part on the revolving superstructure in a side part of the operator's cab, a counterweight provided at a rear part of the revolving superstructure, an engine as a drive source placed on the revolving superstructure between the counterweight and the operator's cab, a NOx selective catalytic reduction device installed on a side of the engine and interposed in an exhaust passage of the engine, a urea water injection valve that injects urea water to exhaust upstream of the NOx selective catalytic reduction device, a urea water tank that stores the urea water, urea water supply piping with one end connected to the urea water injection valve, and the other end connected to the urea water tank, and/or a urea water supply device that is interposed in the urea water supply piping, and feeds the urea water under pressure to the urea water injection valve. The urea water tank can be placed on the revolving superstructure on a front side from a center of revolution of the revolving superstructure, the engine can be placed on the revolving superstructure on a rear side from the center of revolution of the revolving superstructure, the revolving superstructure can have a pair of main frame members that extend in a longitudinal direction near a center in a width direction to reinforce the revolving superstructure and construct the working device mounting section, and a connection frame member that connects the pair of main frame members between the center of revolution of the revolving superstructure and the engine, and/or the urea water supply device can be installed on the connection frame member to face the engine.

According to the present invention, in the construction machine, the urea water supply device is installed on the connection frame member to face the engine. Thereby, the urea water supply device is installed in a position facing the engine on the revolving superstructure by using the existing connection frame in a vicinity of the engine, while a distance from the urea water tank is not made too long and a distance to the urea water injection valve is not made too long.

Accordingly, even when the construction machine significantly tilts with the front side lowered in the longitudinal direction, a change of the distance in the vertical direction from the urea water tank to the urea water supply device is restrained to be small, and urea water sucking performance of the urea water supply device from the urea water tank can be favorably ensured with a slight variation. Likewise, a change of the distance in the vertical direction from the urea water supply device to the urea water injection valve is also restrained to be small, and the urea water discharge pressure of the urea water supply device to the urea water injection valve can be also favorably ensured with a slight variation.
At this time, the urea water supply device is provided at the existing connection frame, and therefore, the urea water supply device can be installed by effectively using the connection frame, without providing a mounting bracket additionally.
Further, since the urea water supply device is provided to face the engine, the urea water supply device is favorably warmed by the heat of the engine, and even in the winter season, freezing of the urea water flowing in the urea water supply device can be prevented while defrost of the urea water which is frozen can be promoted.

Preferably, an opening portion is provided at a portion of the revolving superstructure under the engine to enable maintenance of at least the engine.
Thereby, maintenance of the urea water supply device can be easily performed by using the opening portion provided in the portion of the revolving superstructure under the engine to enable maintenance of at least the engine.
Further, preferably, the connection frame member is a plate member that is laid between the pair of main frame members to be perpendicular to the revolving superstructure, and the urea water supply device is mounted on a surface of the plate member, which faces the engine.
Thereby, the connection frame member is the plate member which is laid between the pair of main frame members to be perpendicular to the revolving superstructure, and therefore, the urea water supply device can be easily mounted on the surface of the connection frame member, which faces the engine.

Further, preferably, at the urea water supply piping, cooling water piping which allows cooling water for the engine to flow through extends along the urea water supply piping, and the urea water supply piping and the cooling water piping are respectively connected to an outer surface of the urea water supply device that is perpendicular to the surface of the plate member, so that urea water and the cooling water flow in the urea water supply device, the construction machine further includes a thermal insulating cover that covers the outer surface of the urea water supply device including connection portions of the urea water supply piping and the cooling water piping and a part of the surface of the plate member, and keeps the connection portions warm.
Accordingly, air inside the thermal insulating cover is kept warm with the thermal insulating cover, and the thermal insulating cover is constructed to cover the outer surface of the urea water supply device and a part of the surface of the plate member. Therefore, the thermal insulating cover can be constructed to be simple by efficiently using the existing connection frame formed of the plate member.

Thereby, the thermal insulating cover is easily attachable and detachable, and maintenance of the urea water supply device can be easily performed.
Further, preferably, a thermal insulating member is provided on a part of the surface of the plate member and a surface of the thermal insulating cover on the urea water supply device side.
Thereby, the air inside the thermal insulating cover can be favorably kept warm.

### BRIEF DESCRIPTION OF THE DRAWINGS

FIG. 1 is a side view showing an entire construction of a construction machine according to the present invention;
FIG. 2 is a diagram schematically showing a urea water supply system;
FIG. 3 is a plan view of a revolving frame of the construction machine showing the urea water supply system according to the present invention;
FIG. 4 is a vertical sectional view of the revolving frame which is taken along a line A-A in FIG. 3, and shows the urea water supply system according to the present invention;
FIG. 5 is a perspective view showing a urea water supply device seen from diagonally above;
FIG. 6 is a perspective view of the urea water supply device in a state in which a thermal insulating cover is detached;
FIG. 7 is a perspective view showing a front side of the thermal insulating cover in a state detached from the urea water supply device;
FIG. 8 is a perspective view showing a back side of the thermal insulating cover in the state detached from the urea water supply device;
FIG. 9 is a view showing a first modification of how to bring cooling water piping close to a connector of urea water supply piping;
FIG. 10 is a view showing a second modification of how to lay the cooling water pipe close to the connector of the urea water supply pipe;
FIG. 11 is a view showing a third modification of how to bring the cooling water piping close to the connector of the urea water supply piping; and
FIG. 12 is a schematic diagram of a revolving frame and the urea water supply system from a side, and is a diagram explaining an effect of the present invention.

### DETAILED DESCRIPTION OF THE PREFERRED EMBODIMENTS

Hereinafter, one embodiment of a construction machine according to the present invention will be described based on the drawings.

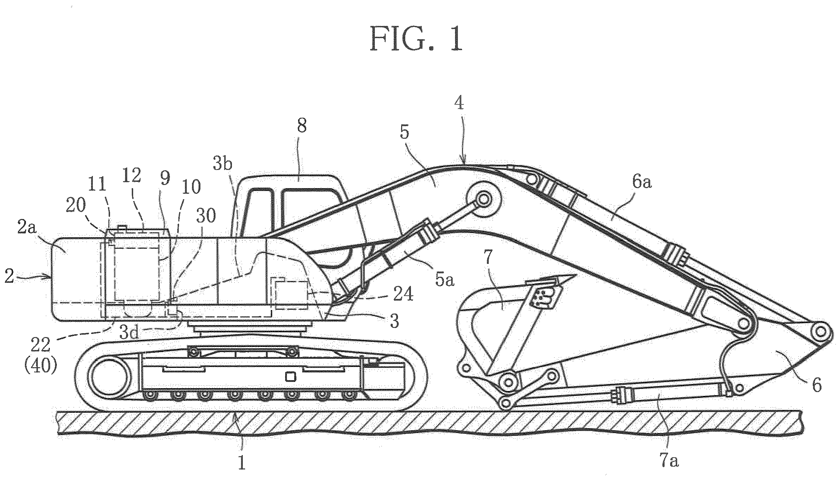

FIG. 1 shows the construction machine including a urea water supply system according to the present invention. In the present embodiment, as the construction machine, a crawler type hydraulic shovel will be described by being cited as an example.
As shown in FIG. 1, the hydraulic shovel is constructed by including a traveling structure 1, a revolving superstructure 2 that is disposed on the traveling structure 1 and is mainly constituted of a revolving frame 3, and a working device 4 that is mounted to the revolving superstructure 2 and performs excavating work of earth and sand, and the like.

The working device 4 is constructed by including a boom 5 that is mounted to the revolving frame 3 rotatably in a vertical direction, an arm 6 that is mounted to a tip end of the boom 5 rotatably in the vertical direction, and a bucket 7 that is mounted to a tip end of the arm 6 rotatably in the vertical direction. The working device 4 includes a boom cylinder 5a that drives the boom 5, an arm cylinder 6a that drives the arm 6, and a bucket cylinder 7a that drives the bucket 7.

On the revolving frame 3, an operator's cab 8 for an operator to perform an operation manipulation of the hydraulic shovel is provided on a front side position, and on a rear side position of the revolving frame 3, that is, at a rear part of the revolving superstructure 2, a counterweight 2a that secures a weight balance is provided. Further, a machine room 9 is provided between the operator's cab 8 and the counterweight 2a.
At a front part on the revolving superstructure 2 in a side part of the operator's cab 8, a working device mounting section to which the working device 4 is mounted is provided.

In the machine room 9, a hydraulic pump (not illustrated) that supplies pressure oil and an engine 10 that is a drive source for driving the hydraulic pump are installed. The pressure oil which is discharged from the hydraulic pump is supplied to a traveling motor provided in the traveling structure 1 and a revolving motor (both are not illustrated) provided in the revolving superstructure 2, whereby self propelling of the hydraulic shovel by the traveling structure 1 is enabled, and the revolving superstructure 2 is capable of revolving around a pivot together with the working device 4. Further, part of the pressure oil is also supplied to the boom cylinder 5a, the arm cylinder 6a and the bucket cylinder 7a which are provided at the working device 4, whereby the boom 5, the arm 6 and the bucket 7 are driven respectively in accordance with supply degrees of the pressure oil, that is, hydraulic pressures.

The engine 10 is a diesel engine, for example, and a muffler 12 is connected to an exhaust passage. Further, a diesel engine generally has a large amount of NOx (nitrogen oxide) contained in exhaust gas, and therefore, an exhaust after-treatment device 11 which is located on an exhaust upstream side from the muffler 12 and is for purifying exhaust gas components including NOx is interposed in an exhaust passage of the diesel engine. In the hydraulic shovel, the exhaust passage extends upward, and the exhaust after-treatment device 11 and the muffler 12 are installed on a side of the engine 10. More specifically, in this case, the exhaust after-treatment device 11 and the muffler 12 are installed on a side and an upper side of the engine 10.
As a device for purifying NOx in the exhaust after-treatment device 11, a urea SCR system is mounted. The urea SCR system refers to a Selective Catalyst Reduction System using urea, that is, a selective catalytic reduction system which selectively reduces NOx by using urea water as a reducing agent, and refers to a device (NOx selective catalytic reduction apparatus) that reduces and removes an NOx component in the exhaust gas by spraying urea water to an exhaust upstream side of the catalyst converter.

At the exhaust upstream side of the catalyst converter of the exhaust after-treatment device 11, a urea water injection valve 20 is provided, a urea water tank 24 in which the urea water is stored is connected to the urea water injection valve 20 via a urea water supply piping 22 that supplies the urea water to the urea water injection valve 20, and a urea water supply device 30 including a supply pump that feeds the urea water under pressure to the urea water injection valve 20 is interposed in the urea water supply piping 22.
Further, in a cold district and the like, urea water flowing in the urea water supply piping 22 is sometimes frozen in the winter season, a cooling water piping 40 for passing cooling water of the engine 10 extends from the engine 10 and the cooling water piping 40 is installed to be along the urea water supply piping 22 so as to be able to keep the urea water warm with heat of the cooling water of the engine 10 to prevent the urea water from being frozen or to defreeze the frozen urea water.

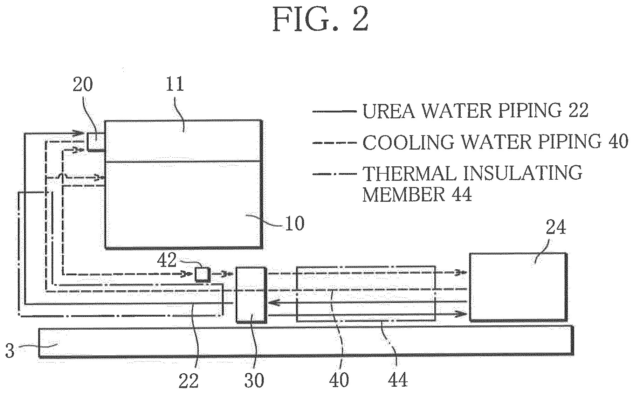

The urea water supply system is constructed of the urea water injection valve 20, the urea water supply piping 22, the urea water tank 24, the urea water supply device 30 and the cooling water piping 40.
Referring to FIG. 2, the urea water supply system is schematically shown. In FIG. 2, the urea water supply piping 22 is shown by the solid line, and the cooling water piping 40 is shown by the broken line. As shown in the drawing, the urea water supply system is installed in the revolving frame 3, and the urea water supply piping 22 is constructed so that the urea water is sucked up from the urea water tank 24 by the urea water supply device 30 and is fed under pressure to the urea water injection valve 20 at a time of operation of the hydraulic shovel, and the excess urea water is returned to the urea water tank 24 from the urea water supply device 30 by the urea water supply device 30 at a time of stop of the hydraulic shovel. Meanwhile, the cooling water piping 40 is constructed so that the cooling water flows around the urea water injection valve 20 and flows around insides of the urea water supply device 30 and the urea water tank 24 along the urea water supply piping 22. Note that in the cooling water piping 40, a cooling water pressure-feeding pump 42 is interposed by being located at an upstream side of the urea water supply device 30, and the cooling water is fed under pressure by the cooling water pressure-feeding pump 42. In the urea water supply piping 22 and the cooling water piping 40, portions which are from the urea water supply device 30 to the urea water tank 24 and a portion where the cooling water returns from the urea water supply device 30 to the engine 10 are gathered together to be in contact with one another, and are covered with a thermal insulating member 44 so that the heat of the cooling water favorably transferred to the urea water and the urea water is kept warm.

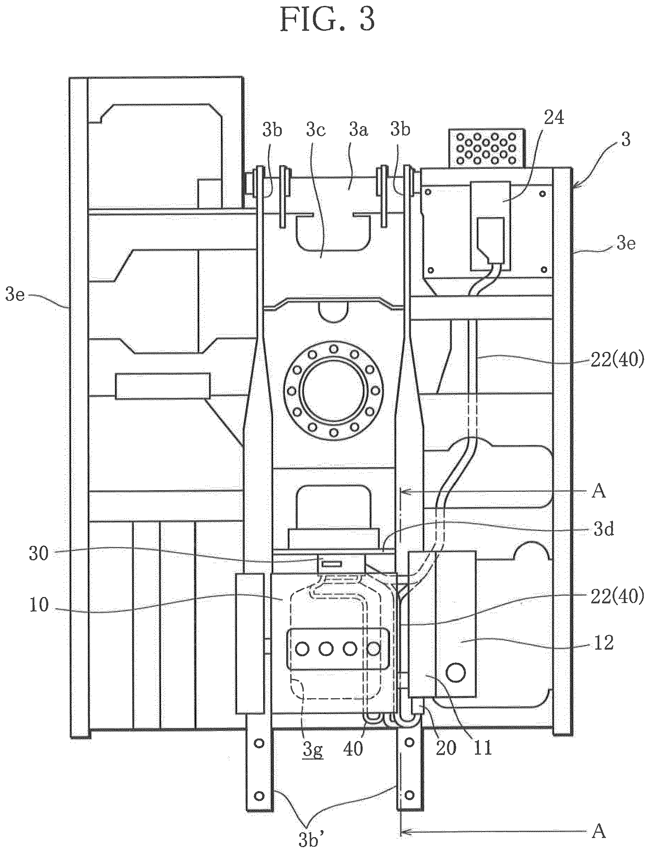

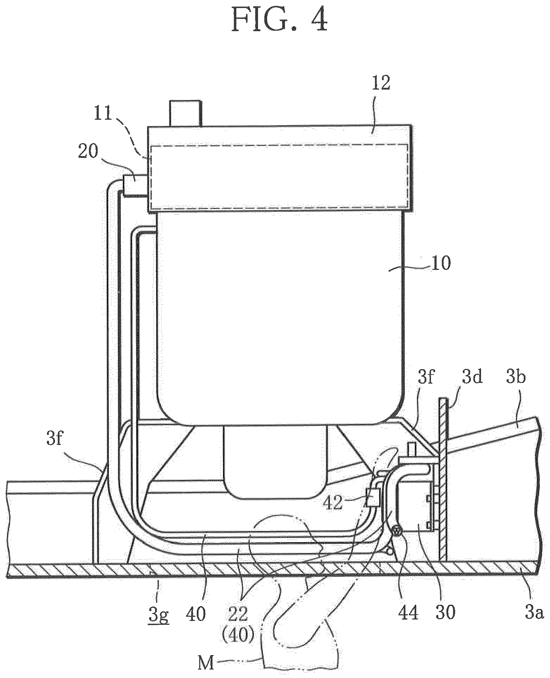

Referring to FIG. 3, the urea water supply system according to the present invention which is installed on the revolving frame 3 is shown as a plan view of the revolving frame 3, and referring to FIG. 4, the urea water supply system according to the present invention is shown as a vertical sectional view of the revolving frame 3 taken along line A-A in FIG. 3.
As shown in FIG. 3, the revolving frame 3 is substantially constructed of a pair of center frame (main frame members) 3b and 3b that extend in a longitudinal direction in a center in a width direction with a predetermined space in the lateral direction to reinforce the revolving superstructure 2, a front connection frame 3c that connects the pair of center frames 3b and 3b at a front part, and a rear connection frame (a connection frame member) 3d that connects the pair of center frames 3b and 3b at a rear part, a pair of side frames 3e and 3e that are formed by connecting a plurality of overhanging beams extending outward in the lateral direction from the respective center frames 3b respectively with side beams extending in the longitudinal direction, and a plurality of bottom plates 3a that are mounted to the frames.
In the revolving frame 3 as above, front part of the center frames 3b form the above described working device mounting section, and the working device 4 is connected to the front parts of the center frames 3b that form the working device mounting section. The engine 10 is placed on tail frame sections 3b' and 3b' that extend rearward from the center frames 3b and 3b via brackets 3f on a rear side from a center of revolution of the revolving frame 3. Note that in the bottom plate 3a, at a part directly under the engine 10, an opening portion 3g is provided for maintenance work, for a worker to perform maintenance (servicing) of the engine 10.

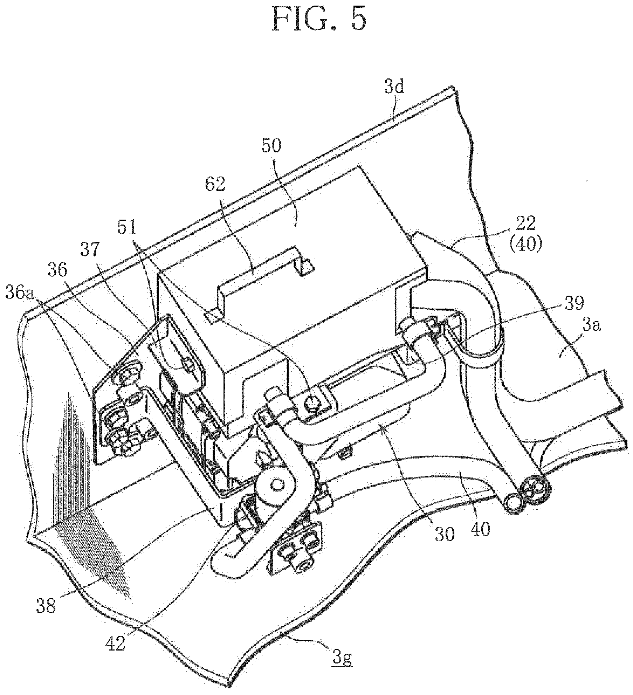

The urea water tank 24 is installed on the side frame 3e on a side opposite from the operator's cab 8 with the center frames 3b therebetween, in the front part of the revolving frame 3 so as to be away from the engine 10 as far as possible, in order to prevent degeneration of the urea water by heat of the engine 10, and because of excellent urea water replenishing workability.
The urea water supply device 30 is installed in a vicinity of the engine 10 and on the side of the center of revolution of the revolving frame 3 from the engine 10 by being located to face the engine 10. In more detail, as shown in FIG. 3 and FIG. 4, the rear connection frame 3d is an existing plate member that is laid between the pair of center frames 3b and 3b to be perpendicular to the bottom plate 3a, and is installed by being located at a lower part of a front side from the engine 10 so that the engine 10 faces a rear side of the rear connection frame 3d. The urea water supply device 30 is installed on a surface of the rear connection frame 3d on the engine 10 side to confront the engine 10 to face the engine 10.
Referring to FIG. 5, a perspective view of the urea water supply device 30 seen from diagonally above is shown, and a construction of the urea water supply device 30 will be described hereinafter.

As shown in FIG. 5, the urea water supply device 30 is fixed to the rear connection frame 3d, and the urea water supply piping 22 and the cooling water piping 40 are connected to the urea water supply device 30 as described above. Further, a thermal insulating cover 50 is mounted to the urea water supply device 30 in such a manner as to cover a top portion of the urea water supply device 30.
In more detail, the urea water supply device 30 is fixed to the rear connection frame 3d by a plurality of bolts 36a via a base seat member 36. The base seat member 36 is constructed by integrally or separately including arm members 37, 38 and 39 for mounting the thermal insulating cover 50. The thermal insulating cover 50 is fastened to the arm members 37, 38 and 39 with bolts 51, and thereby is fixed to the base seat member 36, to the urea water supply device 30 by extension.

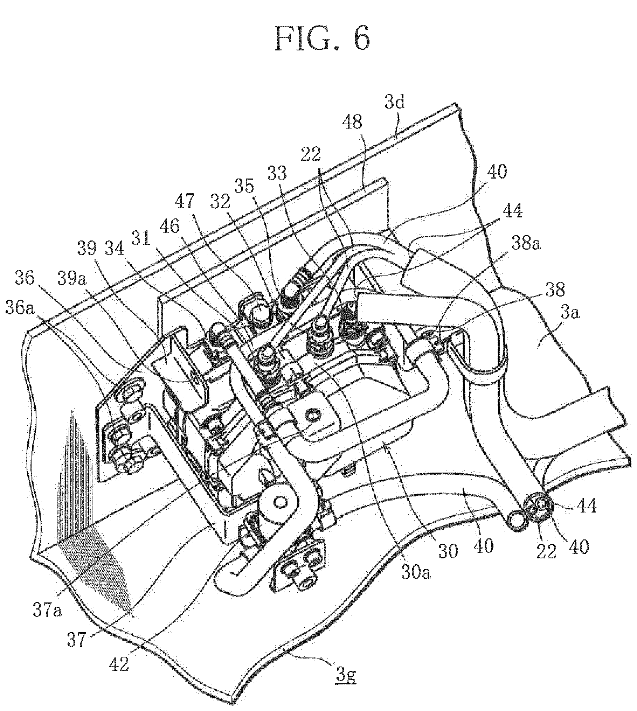

Referring to FIG. 6, the urea water supply device 30 in a state in which the thermal insulating cover 50 is detached is shown. As shown in FIG. 6, the urea water supply piping 22, the cooling water piping 40 and the urea water supply device 30 are respectively connected via connectors. In more detail, of the urea water supply piping 22, an inflow pipe in which the urea water flows from the urea water tank 24 is connected to the urea water supply device 30 with a connector 31, an outflow pipe that returns the urea water to the urea water tank 24 is connected to the urea water supply device 30 with a connector 32, and an outflow pipe that feeds the urea water to the urea water injection valve 20 is connected to the urea water supply device 30 with a connector 33. Further, of the cooling water piping 40, an inflow pipe in which the cooling water flows from the engine 10 is connected to the urea water supply device 30 with a connector 34, and an outflow pipe that feeds the cooling water to the urea water tank 24 is connected to the urea water supply device 30 with a connector 35.

Further, the connectors 31, 32, 33, 34 and 35 are all perpendicularly connected to a same outer surface of the urea water supply device 30, that is, a top surface 30a that is perpendicular to a surface of the rear connection frame 3d. The connectors 31, 32 and 33 of the urea water supply piping 22 and the connectors 34 and 35 of the cooling water piping 40 are installed to be aligned in straight lines in the vehicle body lateral direction parallel with the rear connection frame 3d and parallel with one another so that the connectors 34 and 35 are at the rear connection frame 3d side.
As shown in FIG. 6, of the cooling water piping 40, one portion (a portion extending to the connector 34) that is laid by extending and detouring onto the urea water supply device 30 in the inflow pipe in which the cooling water flows from the engine 10 via the cooling water pressure-feeding pump 42 is installed to be close to the connectors 31, 32 and 33 of the urea water supply piping 22 within a predetermined distance range. That is to say, in a vicinity of connection portions (the connectors 31, 32 and 33 portions) to the urea water supply device 30 in an end portion of the urea water supply piping 22, the cooling water piping 40 cannot be gathered up along the connection portions, and it is difficult to prevent freezing of the urea water and defreeze the frozen urea water. Therefore, of the cooling water piping 40, one portion that is extended and laid on the urea water supply device 30, in the inflow pipe in which the cooling water from the engine 10 flows is made a warming pipe section 46, and the warming pipe section 46 is brought close to the connectors 31, 32 and 33 to warm the portions in the vicinities of the connectors 31, 32 and 33 with heat of the cooling water which flows in the warming pipe section 46.

In more detail, the warming pipe section 46 is installed to extend between the connectors 31, 32 and 33 of the urea water supply piping 22, and the connectors 34 and 35 of the cooling water piping 40, along the top surface 30a of the urea water supply device 30, and cross the connectors 31, 32 and 33 which is perpendicular to the top surface 30a. The warming pipe section 46 is fixed to the top surface 30a with a bolt 47.
Here, the predetermined distance range within which the warming pipe section 46 is brought close to the connectors 31, 32 and 33 is a range where the heat of the cooling water flowing in the warming pipe section 46 reaches the connectors 31, 32 and 33, for example. Further, a portion where the warming pipe section 46 is close to the connectors 31, 32 and 33 is constructed of a member with high thermal conductivity, for example, a metal member such as a copper pipe and a steel pipe, so that the heat of the cooling water easily reaches the connectors 31, 32 and 33.

Here, as shown in FIG. 6, the urea water supply piping 22 extending from the connectors 31 and 32 extend parallel with the top surface 30a, and the warming pipe section 46 also crosses the urea water supply piping 22 extending from the connectors 31 and 32 by being laid close to the connectors 31, 32 and 33. That is to say, the warming pipe section 46 is installed to be also close to the portions of the urea water supply piping 22 along which the cooling water piping 40 in the vicinities of the connectors 31 and 32 cannot be laid. Thereby, not only the connectors 31, 32 and 33, but also the portions of the urea water supply piping 22 extending from the connectors 31 and 32 can be warmed simultaneously with the heat of the cooling water which flows in the warming pipe section 46.
Note that it is conceivable to provide a fin at the warming pipe section 46 in order to enhance heat dissipation performance, but if the fin is provided, the warming pipe section 46 cannot be brought close to the connectors 31, 32 and 33 on the contrary, and therefore, it is preferable not to provide a fin at the warming pipe section 46.

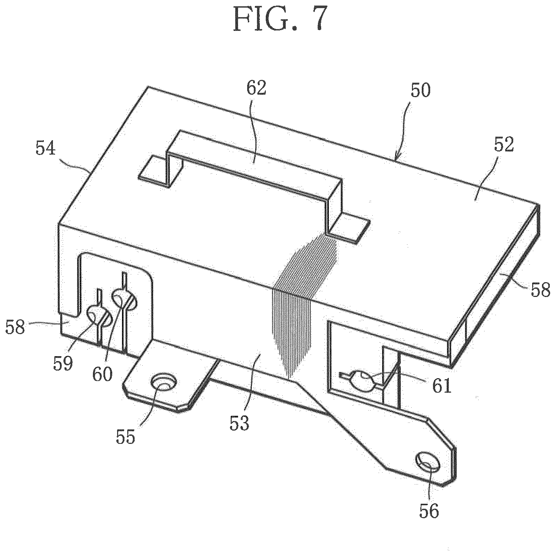

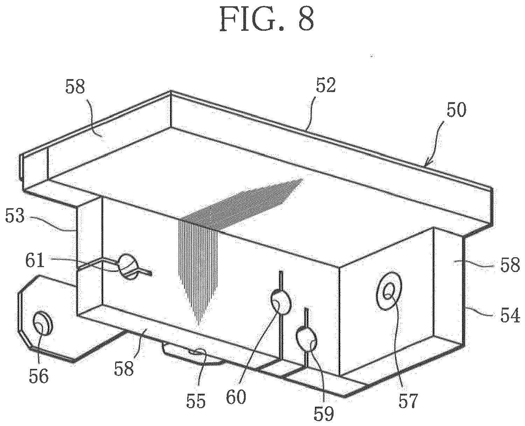

Further, as shown in FIG. 6, on the arm members 37, 38 and 39 provided at the base seat member 36, bolt screwing holes 37a, 38a and 39a for screwing the bolts 51 which mount the thermal insulating cover 50 are respectively formed.
Furthermore, on a surface of the rear connection frame 3d, on the urea water supply device 30 side, a thermal insulating member 48 is provided in such a manner that a lower portion is sandwiched with the rear connection frame 3d and the base seat member 36. The thermal insulating member 48 is constructed of a urethane member, for example.
Referring to FIG. 7 and FIG. 8, a front side and a back side of the thermal insulating cover 50 in a state detached from the urea water supply device 30 are respectively shown in perspective views. The thermal insulating cover 50 is constructed of a top surface 52, a first side surface 53 formed parallel with the rear connection frame 3d and a second side surface 54 formed perpendicularly to the rear connection frame 3d, by working a steel plate, for example. At the first side surface 53, bolt insertion holes 55 and 56 through which the bolts 51 are inserted to mount the thermal insulating cover 50 to the arm members 37 and 38 provided on the base seat member 36 are formed, and at the second side surface 54, a bolt insertion hole 57 through which the bolt 51 is inserted to mount the thermal insulating cover 50 to the arm member 39 provided at the base seat member 36 is formed.

As shown in FIG. 8, a thermal insulating member 58 is provided on a back side of the thermal insulating cover 50, that is, surfaces on the urea water supply device 30 side, of the top surface 52, the first side surface 53 and the second side surface 54. The thermal insulating member 58 is formed of a urethane member, for example, similarly to the above described thermal insulating member 48, and has substantially the same thickness as the thermal insulating member 48.
Cutout portions 53a and 53b are provided in the first side surface 53 of the thermal insulating cover 50 to avoid interference with the above described urea water supply piping 22 and cooling water piping 40, and the thermal insulating member 58 is provided to close the cutout portions 53a and 53b while through-holes 59, 60 and 61 for passing the urea water supply piping 22 and the cooling water piping 40 are left.

The above described thermal insulating member 48 and thermal insulating member 58 are constructed so that the thermal insulating member 58 which is arranged on the top surface 52 abuts on an upper end edge of the thermal insulating member 48, and a side end edge of the thermal insulating member 58 which is arranged on the second side surface 54 abuts on a surface of the thermal insulating member 48, when the thermal insulating cover 50 is mounted on the urea water supply device 30. That is to say, the thermal insulating cover 50 is constructed so that an open surface at the rear connection frame 3d side, which faces the first side surface 53 is closed with the thermal insulating member 48 arranged on the surface of the rear connection frame 3d, and by extension, the rear connection frame 3d, by being mounted on the urea water supply device 30. Note that a surface facing the second side surface 54 remains to open, but the surface is brought into a substantially closed state by the thermal insulating member 44 for the urea water supply piping 22 and the cooling water piping 40. Thereby, the connectors 31, 32 and 33 of the urea water supply piping 22 and the connectors 34 and 35 of the cooling water piping 40 are covered with the thermal insulating cover 50 together with the warming pipe section 46, and a closed space substantially enclosed by the top surface 52, the first side surface 53, the second side surface 54, the rear connection frame 3d, and the thermal insulating member 44 is formed inside the thermal insulating cover 50. Therefore, air in the closed space is warmed by the heat of the cooling water flowing in the warming pipe section 46, and is favorably kept warm by actions of the thermal insulating member 48 and the thermal insulating member 58.

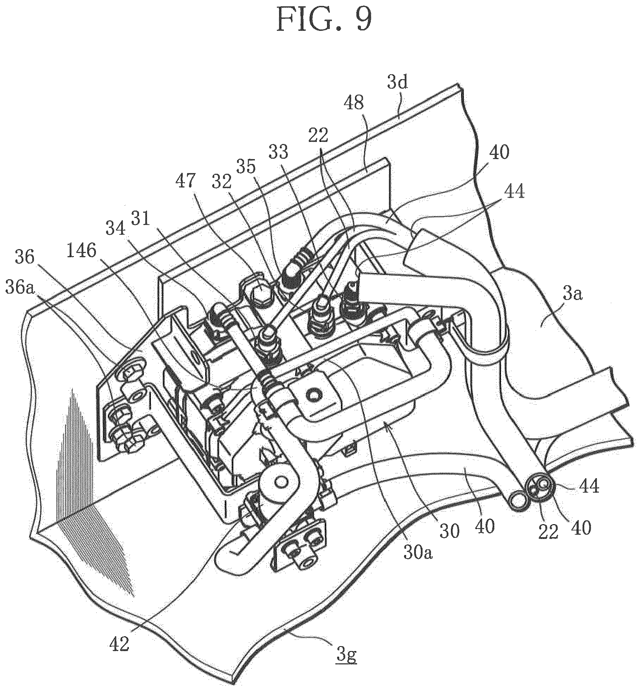

Reference numeral 62 designates a handle of the thermal insulating cover 50, and the handle 62 has a strength thereof set so as to not only attach and detach the thermal insulating cover 50, but also to be able to carry the thermal insulating cover 50, the base seat member 36 and the urea water supply device 30 integrally even in a state in which the thermal insulating cover 50 is mounted to the urea water supply device 30 via the base seat member 36.
Incidentally, the way of laying the cooling water piping 40 close to the connectors 31, 32 and 33 of the urea water supply piping 22 is not limited to the above description, and various modifications are conceivable as shown in FIGS. 9 to 11.
FIG. 9 shows a first modification. In the first modification, one portion that is extended and laid on the urea water supply device 30, in the inflow pipe in which the cooling water from the engine 10 flows, of the cooling water piping 40 is formed as a warming pipe section 146. The warming pipe section 146 is installed to cross the connectors 31, 32 and 33 of the urea water supply piping 22 on a side opposite from the connectors 34 and 35 of the cooling water piping 40.

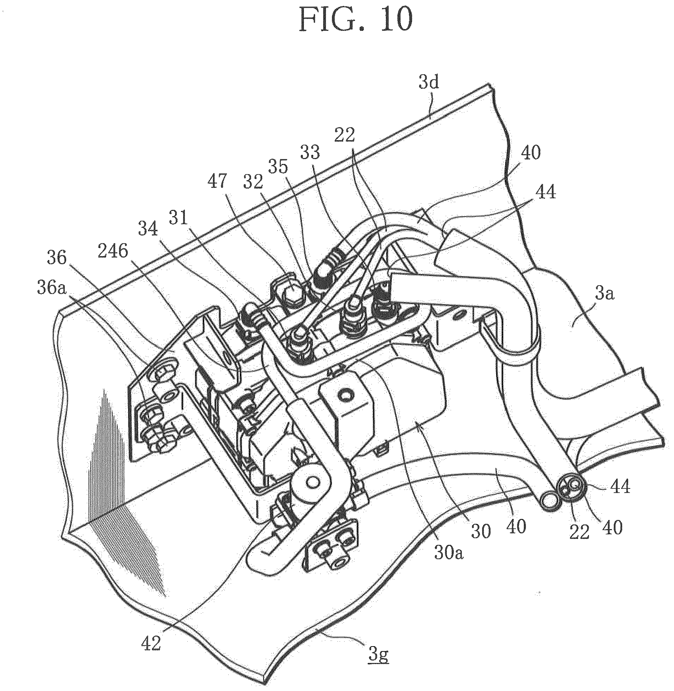

FIG. 10 shows a second modification. In the second modification, one portion that is extended and laid on the urea water supply device 30, in the inflow pipe in which the cooling water from the engine 10 flows, of the cooling water piping 40 is formed as a warming pipe section 246. The warming pipe section 246 is installed to extend between the connectors 31, 32 and 33 of the urea water supply piping 22 and the connectors 34 and 35 of the cooling water piping 40 to cross the connectors 31, 32 and 33, and to also cross the connectors 31, 32 and 33 on a side opposite from the connectors 34 and 35 of the cooling water piping 40 by being formed in series. That is to way, the warming pipe section 246 is installed to surround the connectors 31, 32 and 33 by being formed in series.

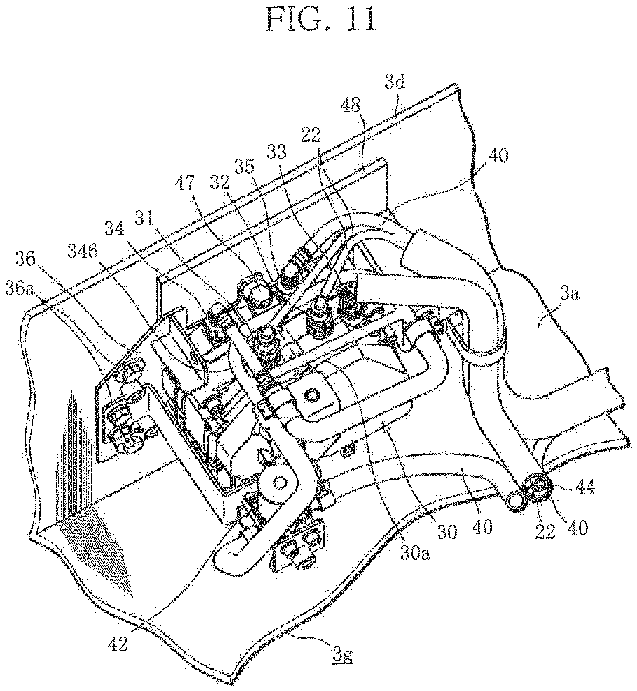

FIG. 11 shows a third modification. In the third modification, one portion that is extended and laid on the urea water supply device 30, in the inflow pipe in which the cooling water from the engine 10 flows, of the cooling water piping 40 is formed as a warming pipe section 346. The warming pipe section 346 is installed to extend between the connectors 31, 32 and 33 of the urea water supply pipe 22 and the connectors 34 and 35 of the cooling water piping 40 to cross the connectors 31, 32 and 33, and to also cross the connectors 31, 32 and 33 on the side opposite from the connectors 34 and 35 of the cooling water piping 40 by being formed in parallel. That is to say, the warming pipe section 346 is installed to surround the connectors 31, 32 and 33 by being formed in parallel.

Hereinafter, an operation and an effect of the urea water supply system of the construction machine which is constructed as above will be described in detail.
As described above, the urea water tank 24 is installed on the side frame 3e of the front part of the revolving frame 3, while the urea water supply device 30 is installed on the surface of the rear connection frame 3d on the engine 10 side in the vicinity of the engine 10 to face the engine 10.
Thereby, the urea water tank 24 is not influenced by the heat of the engine 10, while the urea water supply device 30 is warmed by the heat of the engine 10, whereby even in the winter season, freezing of the urea water flowing in the urea water supply device 30 is prevented and defreezing of the frozen urea water is promoted.

Further, in this case, the urea water supply device 30 is installed on the surface of the rear connection frame 3d on the engine 10 side to face the engine 10, and therefore, the urea water supply device 30 can be installed easily and favorably by effectively using the existing rear connection frame 3d which is a plate member without providing a mounting bracket additionally. In this case, the opening portion 3g is provided for maintenance work of the engine 10 and the like in a lower portion directly under the engine 10, in the bottom plate 3a of the revolving frame 3, and therefore, maintenance work of the urea water supply device 30 can be easily performed by using the opening portion 3g.

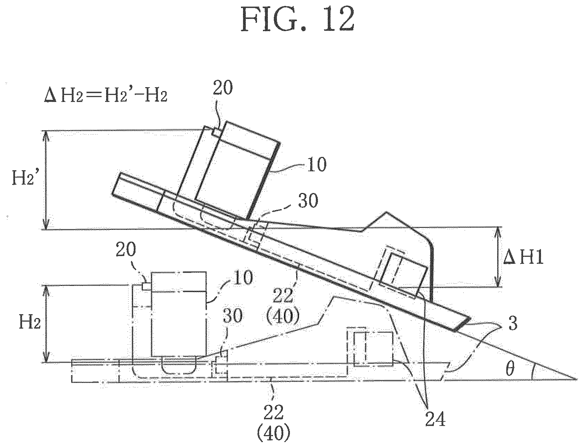

When the urea water supply device 30 is installed on the surface of the rear connection frame 3d on the engine 10 side to face the engine 10 as above, the distance from the urea water tank 24 to the urea water supply device 30 does not become too long, and the distance from the urea water supply device 30 to the urea water injection valve 20 does not become too long. As a result, while FIG. 12 schematically shows a view of the revolving frame 3 and the urea water supply system seen from a side, even when the construction machine tilts to a predetermined inclination limit angle θ by lowering a front side in the longitudinal direction in a slope or the like (a solid line) from a state in a flatland (an alternate long and short dash line), a change in a distance in the vertical direction from the urea water tank 24 to the urea water supply device 30 is restrained to be small. That is to say, when a urea water sucking position of the urea water tank 24 is substantially the same height in the vertical direction as the urea water supply device 30 in the flatland, a change amount in the vertical direction in a slope or the like is ΔH1 in a specified value range where the urea water supply device 30 sucks the urea water from the urea water tank 24 without hindrance, and the urea water sucking performance of the urea water supply device 30 from the urea water tank 24 is favorably ensured with a slight variation.

Likewise, a change in a distance in the vertical direction from the urea water supply device 30 to the urea water injection valve 20 can be restrained to be small. That is to say, when a distance from the urea water supply device 30 to the urea water injection valve 20 in a flatland is H2, and a distance at the time of tilting to the predetermined inclination limit angle θ is H2', a change amount in the vertical direction is ΔH2 (ΔH2=H2'-H2) within a specified value range where there is no hindrance in the discharge pressure of the urea water in the urea water injection valve 20, and the discharge pressure of the urea water of the urea water supply device 30 to the urea water injection valve 20 is also ensured favorably with a slight variation.
Thereby, the urea water can be always injected stably from the urea water injection valve 20.

Further, in the urea water supply device 30, one portion which is extended and laid on the urea water supply device 30, in the inflow pipe in which the cooling water from the engine 10 flows, of the cooling water piping 40 is formed as the warming pipe section 46, 146, 246 or 346, the warming pipe section 46, 146, 246 or 346 is brought close to the connectors 31, 32 and 33 which are the connection portions of the urea water supply piping 22 to the urea water supply device 30, and the connectors 31, 32 and 33 portions are warmed with the heat of the cooling water flowing in the warming pipe section 46. Therefore, even in the connectors 31, 32 and 33 portions along which the cooling water piping 40 cannot be laid, freezing of the urea water can be prevented and the frozen urea water can be defreezed efficiently with the simple structure.

In this case, when the warming pipe sections 246 and 346 are constructed to surround the connectors 31, 32 and 33 as in the above described second and third modifications, the connector 31, 32 and 33 portions can be sufficiently warmed with the heat of the cooling water flowing in the warming pipe sections 236 and 346.
In particular, at a stopping time of the hydraulic shovel, the urea water is returned to the urea water tank 24 from the urea water supply device 30. At this time, the urea water sometimes remains in the urea water supply piping 22 between the urea water supply device 30 and the urea water tank 24, and the urea water also sometimes remains in the connector 32 portion which is the connection portion of the outflow pipe which returns the urea water to the urea water tank 24. However, by warming the urea water with the heat of the cooling water flowing in the warming pipe section 46, freezing of the urea water in the connector 32 portion can be prevented and the frozen urea water can be defrosted reliably.

Furthermore, the thermal insulating cover 50 is provided on the urea water supply device 30 so as to cover the connectors 31, 32 and 33 of the urea water supply piping 22, the connectors 34 and 35 of the cooling water piping 40 and the warming pipe section 46, whereby the air warmed by the heat of the cooling water flowing in the warming pipe section 46 inside the thermal insulating cover 50 is favorably kept warm. In this case, the thermal insulating cover 50 is constructed of the top surface 52, the first side surface 53 and the second side surface 54 with the thermal insulating member 58 placed on the inner surfaces, and the closed space is formed in the thermal insulating cover 50 so that the opened surface at the rear connection frame 3d side confronting the first side surface 53 is closed with the rear connection frame 3d with the thermal insulating member 48 placed on the surface. Therefore, the thermal insulating cover 50 can be constructed to be simple by efficiently using the existing rear connection frame 3d formed of the plate member.
When the thermal insulating cover 50 is constructed as above, a worker M can easily attach and detach the thermal insulating cover 50 of the urea water supply device 30 from the opening portion 3g for maintenance work, as FIG. 4 shows the worker M together, and the maintenance work of the urea water supply device 30 can be performed more easily.

Explanation of the embodiment will be finished, and the mode of the present invention is not limited to the above described embodiment.
For example, in the above described embodiment, the one portion (the portion extending toward the connector 34) which is extended and laid on the urea water supply device 30, in the inflow pipe in which the cooling water from the engine 10 flows, of the cooling water piping 40 is formed as the warming pipe section 46, 146, 246 or 346, but the warming pipe section may be constructed of one portion (a portion extending from the connector 35) that is extended and laid on the urea water supply device 30, in the outflow pipe from which the cooling water from the engine 10 flows out, of the cooling water piping 40.
Further, in the above described embodiment, in the urea water supply device 30, the warming pipe sections 46, 146, 246 or 346 is constructed of the one portion of the cooling water piping 40, and the warming pipe section 46, 146, 246 or 346 is brought close to the connectors 31, 32 and 33 which is the connection portion of the urea water supply piping 22 to the urea water supply device 30. However, when the connector as the connection portion of the urea water supply piping 22 to the urea water tank 24, and the connector as the connection portion of the cooling water piping 40 to the urea water tank 24 are provided at the urea water tank 24, one portion of the inflow pipe in which the cooling water from the engine 10 flows or one portion of the outflow pipe from which the cooling water flows out, in the cooling water piping 40, is formed as the heating pipe section, in the urea water tank 24, and the warming pipe section may be brought close to the connector which is the connection portion of the urea water supply piping 22 to the urea water tank 24.

Further, in the above described embodiment, in the urea water supply device 30, the cooling water piping 40 is extended to construct the warming pipe section 46, 146, 246 or 346, and the connectors 31, 32 and 33 which are the connection portions of the urea water supply piping 22 to the urea water supply device 30 and the connectors 34 and 35 of the cooling water piping 40 including the warming pipe section 46, 146, 246 or 346 are covered with the thermal insulating cover 50, but the connectors 31, 32, 33, 34 and 35 may be covered with the thermal insulating cover 50 without providing the warming pipe sections 46, 146, 246 or 346 in the urea water supply device 30. In this case, the through-holes 60 and 61 for passing the cooling water piping 40 through do not have to be provided in the thermal insulating member 58.

Further, in the above described embodiment, the crawler type hydraulic shovel is cited and described as an example, as the construction machine, but the construction machine is not limited to this, and as long as the engine includes the urea SCR system, the present invention may be applied to a wheel type hydraulic shovel, and also can be widely applied to construction machines such as a lift truck, a damp truck, a wheel loader, a hydraulic crane, and a bulldozer.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A construction machine, comprising:
a revolving superstructure (2, 3);
an operator's cab (8) provided at a front part on the revolving superstructure (2, 3);
a working device mounting section provided at the front part on the revolving superstructure (2, 3) in a side part of the operator's cab (8);
a counterweight (2a) provided at a rear part of the revolving superstructure (2, 3);
an engine (10) as a drive source placed on the revolving superstructure (2, 3) between the counterweight (2a) and the operator's cab (8);
a NOx selective catalytic reduction device (11) installed on a side of the engine (10) and interposed in an exhaust passage of the engine (10);
a urea water injection valve (20) that injects urea water to exhaust upstream of the NOx selective catalytic reduction device (11);
a urea water tank (24) that stores the urea water;
urea water supply piping (22) with one end connected to the urea water injection valve (20), and the other end connected to the urea water tank (24); and
a urea water supply device (30) that is interposed in the urea water supply piping (22), and feeds the urea water under pressure to the urea water injection valve (20),
the urea water tank (24) is placed on the revolving superstructure (2, 3) on a front side from a center of revolution of the revolving superstructure (2, 3),
the engine (10) is placed on the revolving superstructure (2, 3) on a rear side from the center of revolution of the revolving superstructure (2, 3),
the revolving superstructure (2, 3) has a pair of main frame members (3b) that extend in a longitudinal direction near a center in a width direction to reinforce the revolving superstructure (2, 3) and construct the working device mounting section, **characterized in that** a connection frame member (3d) that connects the pair of main frame members (3b) between the center of revolution of the revolving superstructure (2, 3) and the engine (10), and
the urea water supply device (30) is installed on the connection frame member (3d) to face the engine (10).

2. The construction machine according to claim 1, **characterized in that**
an opening portion (3g) is provided at a portion of the revolving superstructure (2, 3) under the engine (10) to enable maintenance of at least the engine (10).

3. The construction machine according to claim 1 or 2, **characterized in that**
the connection frame member (3d) is a plate member that is laid between the pair of main frame members (3b) to be perpendicular to the revolving superstructure (2, 3), and
the urea water supply device (30) is mounted on a surface of the plate member (3d), which faces the engine (10).

4. The construction machine according to claim 3, **characterized in that**
at the urea water supply piping (22), cooling water piping (40) which allows cooling water for the engine (10) to flow through extends along the urea water supply piping (22), and
the urea water supply piping (22) and the cooling water piping (40) are respectively connected to an outer surface of the urea water supply device (30) that is perpendicular to the surface of the plate member (3d), so that urea water and the cooling water flow in the urea water supply device (30),
the construction machine further comprising a thermal insulating cover (50) that covers the outer surface of the urea water supply device (30) including connection portions of the urea water supply piping (22) and the cooling water piping (40) and a part of the surface of the plate member (3d), and keeps the connection portions warm.

5. The construction machine according to claim 4, **characterized in that**
a thermal insulating member (58) is provided on a part of the surface of the plate member (3d) and a surface of the thermal insulating cover (50) on the urea water supply device (30) side.

## Patentansprüche

1. Baumaschine, die Folgendes umfasst:
einen drehbaren Oberaufbau (2, 3);
eine Fahrerkabine (8), die an einem Vorderteil des drehbaren Oberaufbaus (2, 3) vorgesehen ist;
einen Arbeitsvorrichtungsmontageabschnitt, der an dem Vorderteil des drehbaren Oberaufbaus (2, 3) in einem Seitenteil der Fahrerkabine (8) vorgesehen ist;
ein Gegengewicht (2a), das in einem Heckabschnitt des drehbaren Oberaufbaus (2, 3) vorgesehen ist;
eine Kraftmaschine (10) als eine Antriebsquelle, die auf dem drehbaren Oberaufbau (2, 3) zwischen dem Gegengewicht (2a) und der Fahrerkabine (8) positioniert ist;
eine NOₓ-selektive katalytische Reduktionsvorrichtung (11), die auf einer Seite der Kraftmaschine (10) installiert ist und in einen Abgaskanal der Kraftmaschine (10) eingefügt ist;
ein Harnstoffwassereinspritzventil (20), das vor der NOₓ-selektiven katalytischen Reduktionsvorrichtung (11) Harnstoffwasser in das Abgas einspitzt;
einen Harnstoffwassertank (24), der das Harnstoffwasser speichert;
eine Harnstoffwasserversorgungsleitung (22), wovon ein Ende mit dem Harnstoffwassereinspritzventil (20) verbunden ist und das andere Ende mit dem Harnstoffwassertank (24) verbunden ist; und
eine Harnstoffwasserversorgungsvorrichtung (30), die in die Harnstoffwasserversorgungsleitung (22) eingefügt ist und Harnstoffwasser unter Druck in das Harnstoffwassereinspritzventil (20) einspeist,
wobei der Harnstoffwassertank (24) in Bezug auf ein Drehzentrum des drehbaren Oberaufbaus (2, 3) auf einer Vorderseite auf dem drehbaren Oberaufbau (2, 3) positioniert ist,
wobei die Kraftmaschine (10) in Bezug auf das Drehzentrum des drehbaren Oberaufbaus (2, 3) auf einer Heckseite des drehbaren Oberaufbaus (2, 3) positioniert ist,
wobei der drehbare Oberaufbau (2, 3) ein Paar Hauptrahmenelemente (3b) aufweist, die sich in einer Längsrichtung in der Nähe eines Mittelpunkts in Breitenrichtung erstrecken, um den drehbaren Oberaufbau (2, 3) zu verstärken und den Arbeitsvorrichtungsmontageabschnitt zu erstellen,
**dadurch gekennzeichnet, dass** ein Verbindungsrahmenelement (3d) vorgesehen ist, das das Paar Hauptrahmenelemente (3b) zwischen dem Drehzentrum des drehbaren Oberaufbaus (2, 3) und der Kraftmaschine (10) verbindet, und die Harnstoffwasserversorgungsvorrichtung (30) auf dem Verbindungsrahmenelement (3d) installiert ist, so dass sie der Kraftmaschine (10) gegenüber liegt.

2. Baumaschine nach Anspruch 1, **dadurch gekennzeichnet, dass**
ein Öffnungsabschnitt (3g) an einem Abschnitt des drehbaren Oberaufbaus (2, 3) unter der Kraftmaschine (10) vorgesehen ist, um die Wartung zumindest der Kraftmaschine (10) zu ermöglichen.

3. Baumaschine nach Anspruch 1 oder 2, **dadurch gekennzeichnet, dass**
das Verbindungsrahmenelement (3d) ein Plattenelement ist, das zwischen das Paar Hauptrahmenelemente (3b) gelegt ist, so dass es senkrecht zu dem drehbaren Oberaufbau (2, 3) ist, und
die Harnstoffwasserversorgungsvorrichtung (30) auf einer Oberfläche des Plattenelements (3d) montiert ist, die der Kraftmaschine (10) gegenüberliegt.

4. Baumaschine nach Anspruch 3, **dadurch gekennzeichnet, dass**
sich an der Harnstoffwasserversorgungsleitung (22) eine Kühlwasserleitung (40), die erlaubt, dass Kühlwasser für die Kraftmaschine (10) hindurchfließt, entlang der Harnstoffwasserversorgungsleitung (22) erstreckt, und
die Harnstoffwasserversorgungsleitung (22) und die Kühlwasserleitung (40) jeweils mit einer äußeren Oberfläche der Harnstoffwasserversorgungsvorrichtung (30) verbunden ist, die senkrecht zu der Oberfläche des Plattenelements (3d) ist, so dass Harnstoffwasser und Kühlwasser in die Harnstoffwasserversorgungsvorrichtung (30) fließen,
die Baumaschine ferner eine wärmeisolierende Abdeckung (50) umfasst, die die äußere Oberfläche der Harnstoffwasserversorgungsvorrichtung (30) einschließlich der Verbindungsabschnitte der Harnstoffwasserversorgungsleitung (22) und der Kühlwasserleitung (40) und einen Teil der Oberfläche des Plattenelements (3d) bedeckt und die Verbindungsabschnitte warm hält.

5. Baumaschine nach Anspruch 4, **dadurch gekennzeichnet, dass**
ein wärmeisolierendes Element (58) auf einem Teil der Oberfläche des Plattenelements (3d) und einer Oberfläche der wärmeisolierenden Abdeckung (50) auf der Seite der Harnstoffwasserversorgungsvorrichtung (30) vorgesehen ist.

## Revendications

1. Machine de chantier, comprenant :
une superstructure en révolution (2, 3) ;
une cabine pour opérateur (8) prévue au niveau d'une partie frontale sur la superstructure en révolution (2, 3) ;
une section de montage pour dispositif de travail, prévue à la partie frontale sur la superstructure en révolution (2, 3) dans une partie latérale de la cabine pour opérateur (8) ;
un contrepoids (2a) prévu à une partie arrière de la superstructure en révolution (2, 3) ;
un moteur (10) à titre de source motrice placé sur la superstructure en révolution (2, 3) entre le contrepoids (2a) et la cabine pour opérateur (8) ;
un dispositif de réduction catalytique sélective de NOx (11) installé sur un côté du moteur (10) et interposé dans un passage d'échappement du moteur (10) ;
une valve d'injection d'eau/urée (20) qui injecte de l'eau/urée dans l'échappement en amont du dispositif de réduction catalytique sélective de NOx (11) ;
un réservoir d'eau/urée (24) qui stocke de l'eau/urée ;
un tubage d'alimentation d'eau/urée (22) dont une extrémité est connectée à la valve d'injection d'eau/urée (20), et dont l'autre extrémité est connectée au réservoir d'eau/urée (24) ; et
un dispositif d'alimentation d'eau/urée (30) qui est interposé dans le tubage d'alimentation d'eau/urée (22) et qui alimente de l'eau/urée sous pression à la valve d'injection d'eau/urée (20),
le réservoir d'eau/urée (24) est placé sur la superstructure en révolution (2, 3) sur un côté frontal depuis un centre de révolution de la superstructure en révolution (2, 3),
le moteur (10) est placé sur la superstructure en révolution (2, 3) sur un côté arrière depuis le centre de révolution de la superstructure en révolution (2, 3),
la superstructure en révolution (2, 3) possède une paire d'éléments de châssis principaux (3b) qui s'étendent dans une direction longitudinale à proximité d'un centre dans une direction en largeur afin de renforcer la superstructure en révolution (2, 3) et construire la section de montage pour dispositif de travail,
**caractérisée en ce qu'**un élément de châssis de connexion (3d), qui connecte la paire d'éléments de châssis principaux (3b) entre le centre de révolution de la superstructure en révolution (2, 3) et le moteur (10), et le dispositif d'alimentation d'eau/urée (30) est installé sur l'élément de châssis de connexion (3d) en face du moteur (10).

2. Machine de chantier selon la revendication 1,
**caractérisée en ce que**
une portion ouverte (3g) est prévue au niveau d'une portion de la superstructure en révolution (2, 3) au-dessous du moteur (10) pour permettre la maintenance du moteur au moins (10).

3. Machine de chantier selon la revendication 1 ou 2,
**caractérisée en ce que**
l'élément de châssis de connexion (3d) est un élément en plaque qui est posé entre la paire d'éléments de châssis principaux (3b) pour être perpendiculaire à la superstructure en révolution (2, 3), et
le dispositif d'alimentation d'eau/urée (30) est monté sur une surface de l'élément en plaque (2d) qui est en face du moteur (10).

4. Machine de chantier selon la revendication 3,
**caractérisée en ce que**
au niveau du tubage d'alimentation d'eau/urée (22), un tubage d'eau de refroidissement (40) qui permet l'écoulement d'eau de refroidissement pour le moteur (10) s'étend le long du tubage d'alimentation d'eau/urée (22), et
le tubage d'alimentation d'eau/urée (22) et le tubage d'eau de refroidissement (40) sont respectivement connectés à une surface extérieure du dispositif d'alimentation d'eau/urée (30) qui est perpendiculaire à la surface de l'élément en plaque (3d), de sorte que l'eau/urée et que l'eau de refroidissement s'écoulent dans le dispositif d'alimentation d'eau/urée (30), la machine de chantier comprenant en outre une couverture d'isolation thermique (50) qui couvre la surface extérieure du dispositif d'alimentation d'eau/urée (30) incluant des portions de connexion du tubage d'alimentation d'eau/urée (22) et du tubage d'eau de refroidissement (40) et une partie de la surface de l'élément en plaque (3d), et qui maintient au chaud les portions de connexion.

5. Machine de chantier selon la revendication 4,
**caractérisée en ce que**
un élément d'isolation thermique (58) est prévu sur une partie de la surface de l'élément en plaque (3d) et d'une surface de la couverture d'isolation thermique (50) du côté du dispositif d'alimentation d'eau/urée (30).
